Europäisches Patentamt

European Patent Office

Office européen des brevets

(19)

(11) Veröffentlichungsnummer : **0 115 867**
**B1**

(12) **EUROPÄISCHE PATENTSCHRIFT**

(45) Veröffentlichungstag der Patentschrift :
**19.08.87**

(51) Int. Cl.⁴ : **G 11 B 15/04**

(21) Anmeldenummer : **84101127.3**

(22) Anmeldetag : **03.02.84**

(54) **Abtastanordnung.**

(30) Priorität : **08.02.83 DE 3304261**

(43) Veröffentlichungstag der Anmeldung :
**15.08.84 Patentblatt 84/33**

(45) Bekanntmachung des Hinweises auf die Patenterteilung : **19.08.87 Patentblatt 87/34**

(84) Benannte Vertragsstaaten :
**DE FR GB**

(56) Entgegenhaltungen :
**DE-A- 1 499 603**
**US-A- 3 688 300**
**US-A- 3 772 662**
**US-A- 4 063 292**
**US-A- 4 184 180**

(73) Patentinhaber : **Siemens Aktiengesellschaft Berlin und München**
**Wittelsbacherplatz 2**
**D-8000 München 2 (DE)**

(72) Erfinder : **Kegler, Ernst**
**Olivierstrasse 8**
**D-8000 München 71 (DE)**
Erfinder : **Svenka, Konrad, Dipl.-Ing.**
**Schochenbergstrasse 50**
**D-8000 München 21 (DE)**
Erfinder : **Thierauf, Klaus, Dipl.-Ing.**
**Karlsteinstrasse 17**
**D-8000 München 45 (DE)**

EP 0 115 867 B1

Jouve, 18, rue St-Denis, 75001 Paris, France

**Beschreibung**

Die Erfindung bezieht sich auf eine Abtastanordnung zum Abtasten eines in einer Magnetbandspule eingelegten Schreibrings entsprechend dem Oberbegriff des Patentanspruchs 1. Eine derartige Anordnung ist z. B. aus US-A-3 772 662 bekannt.

Es ist bereits allgemein bekannt, auf einem Magnetband gespeicherte Daten dadurch gegen ein versehentliches Überschreiben oder Löschen zu schützen, daß ein Schreibring in eine Ausnehmung an der Rückseite der zugehörigen Magnetbandspule konzentrisch eingelegt wird. Nur bei einem eingelegten Schreibring können Daten auf das Magnetband aufgezeichnet oder gelöscht werden. Ohne den Schreibring kann das Magnetband nur gelesen werden.

Es ist ferner bekannt, die An- und Abwesenheit des Schreibrings optoelektronisch unter Verwendung eines Abtastrings und eines zugehörigen optoelektronischen Abtastelements zu prüfen. Der Abtastring weist einen Durchmesser auf, der demjenigen des Schreibrings entspricht und wird am Bandwickel in axialer Richtung verschiebbar an der Rückseite der Magnetbandspule angeordnet. Wenn kein Schreibring eingelegt ist, wird der Abtastring infolge der Federkraft einer oder mehrerer Federn in die entsprechende Ausnehmung für den Schreibring an der Rückseite der Magnetbandspule hineingeschoben. Ein Hineinschieben des Abtastrings in die Ausnehmung wird dagegen verhindert, wenn der Schreibring eingelegt ist. Die Verschiebung des Abtastrings in axialer Richtung wird mittels eines optoelektronischen Abtastelements festgestellt. Zu diesem Zweck wird beispielsweise die Außenseite des Abtastrings in axialer Richtung mit zwei Flächen versehen, die einen unterschiedlichen Reflexionsgrad aufweisen. Beispielsweise wird die vordere Hälfte der Außenseite mit schwarzer Farbe versehen, während die hintere Hälfte verspiegelt ist. Das optoelektronische Abtastelement ist vorzugsweise als Reflexionslichtschranke ausgebildet, die in Abhängigkeit von der axialen Verschiebung des Abtastrings bei fehlendem Schreibring die verspiegelte Fläche und bei eingelegtem Schreibring die schwarze Fläche abtastet und auf diese Weise ein entsprechendes Abtastsignal erzeugt, das die An- oder Abwesenheit des Schreibrings anzeigt.

Mit Hilfe einer derartigen Abtastanordnung kann jedoch lediglich eine statische Überprüfung der An- und Abwesenheit des Schreibrings durchgeführt werden. Sie weist eine verhältnismäßig geringe Betriebssicherheit auf, da das Ausfallen des optoelektronischen Abtastelements nicht ohne weiteres erkannt werden kann. In diesem Fall kann es zu einer falschen Signalisierung kommen, so daß die Gefahr besteht, daß geschützte Daten auf dem Magnetband versehentlich überschrieben oder gelöscht werden.

Eine dynamische Überprüfung ist aus US-A-4 184 180 bekannt. In der älteren Patentanmeldung P 32 16 280.4 (DE-A-3 216 280) nicht vorveröffentlicht ist eine Abtastanordnung beschrieben, bei der der Abtastring gegeneinander versetzt angeordnete Flächen mit unterschiedlichem Reflexionsgrad aufweist, die unter Verwendung von zwei optoelektronischen Abtastelementen abgetastet werden. In Abhängigkeit von der Verschiebung des Abtastrings werden jeweils Flächen mit unterschiedlichem oder gleichem Reflexionsgrad und bei einer Drehung des Abtastrings werden zeitlich nacheinander jeweils Flächen mit unterschiedlichem Reflexionsgrad abgetastet, so daß die An- und Abwesenheit des Schreibrings sowohl statisch als auch dynamisch abgetastet werden kann.

Der Erfindung liegt die Aufgabe zugrunde, eine Abtastanordnung anzugeben, bei deren Verwendung die An- und Abwesenheit des Schreibrings statisch und dynamisch d. h. mit großer Betriebssicherheit erkannt werden kann und die dennoch einen verhältnismäßig geringen Aufwand erfordert.

Erfindungsgemäß wird die Aufgabe bei der Anordnung der eingangs genannten Art durch die im kennzeichnenden Teil des Patentanspruchs 1 angegebenen Merkmale gelöst.

Durch die Verwendung der Markierung ist es nicht nur möglich, die An- oder Abwesenheit des Schreibrings statisch, sondern auch dynamisch zu überprüfen. Die statische Überprüfung erfolgt dadurch, daß das Abtastelement, das als Reflexionslichtschranke ausgebildet ist, durch den hohen Reflexionsgrad bei eingelegtem Schreibring ein entsprechendes Abtastsignal abgibt. Bei der Drehung der Magnetbandspule erzeugt das Abtastelement infolge der Markierung Taktimpulse, die für die dynamische Überprüfung herangezogen werden. Nur beim Auftreten der Taktimpulse ist ein Beschreiben oder Löschen des Magnetbands möglich. Die Breite der Markierung ist so bemessen, daß einerseits eine sichere Unterbrechung des reflektierten Lichts bei der Drehung stattfindet und daß andererseits die statische Aussage über das Vorhandensein des Schreibrings über nahezu den gesamten Umfang ermöglicht wird. Bei einem fehlenden Schreibring befindet sich die Fläche mit dem hohen Reflexionsgrad nicht mehr unter dem Abtastelement, so daß dieses kein Abtastsignal erzeugt. Der Abtastring kann so ausgebildet sein, daß bei fehlendem Schreibring das vom Abtastelement ausgesandte Licht ins Leere geht oder daß das Licht auf dem Abtastring auf eine Fläche mit niedrigem Reflexionsgrad auftrifft. Die Markierung wird als Schlitz in dem Abtastring ausgebildet.

Zum Erreichen eines hohen Kontrasts ist es zweckmäßig, wenn unterhalb des Schlitzes an der Innenseite des Abtastrings ein Sackloch vorgesehen ist, das ähnlich einem « schwarzen Loch » wirkt.

Dem optoelektronischen Abtastelement ist zweckmäßigerweise eine Auswertestufe nachgeschaltet, die einerseits einen Verstärker aufweist, der Abtastsignale zur statischen Überprüfung abgibt und die eine Zeitstufe aufweist, die das Auftreten von Impulsen während der Drehung des Abtastrings bei eingelegtem Schreibring überprüft.

Ein Ausführungsbeispiel der Abtastanordnung gemäß der vorliegenden Erfindung wird im folgenden anhand von Zeichnungen näher erläutert. Es zeigen

Figur 1 eine Darstellung der Abtastanordnung bei einem in der Magnetbandspule eingelegten Schreibring,

Figur 2 eine Darstellung der Abtastanordnung bei einem fehlenden Schreibring,

Figur 3 ein Blockschaltbild der Abtastanordnung.

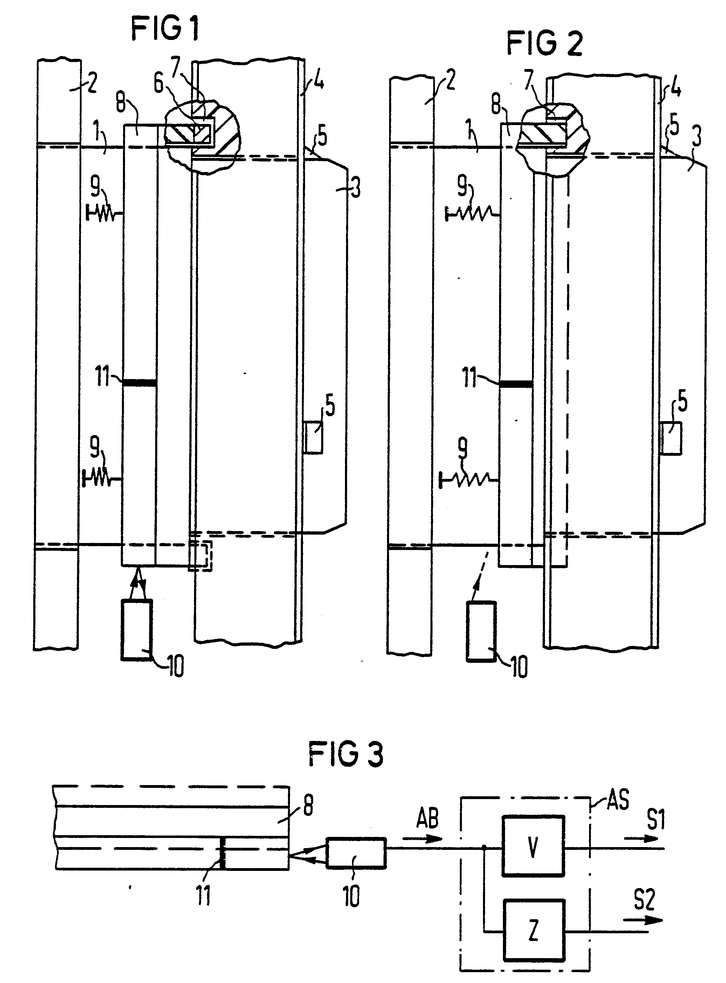

Bei der Darstellung in Fig. 1 ragt ein unter Verwendung eines nicht dargestellten Wickelmotors angetriebener Bandwickel 1 durch eine Grundplatte 2 eines Magnetbandgeräts hindurch. Auf dem Wickel 3 ist eine Magnetbandspule 4 aufgelegt und unter Verwendung von Klauen 5 festgeklemmt. An der Rückseite der Magnetbandspule 4 ist eine Abtastanordnung zum Abtasten der An- und Abwesenheit eines Schreibrings 6 in einer Ausnehmung 7 an der Rückseite der Magnetspule 4 vorgesehen. Die Abtastanordnung enthält einen Abtastring 8, der in axialer Richtung verschiebbar auf dem Bandwickel 1 angeordnet ist und durch Federn 9 gegen die Magnetbandspule 4 gedrückt wird. Weiterhin enthält die Abtastanordnung ein optoelektronisches Abtastelement 10, das vorzugsweise als Reflexionslichtschranke ausgebildet ist. Der Abtastring 8 ist an seiner Außenseite mit einer Fläche mit hohem Reflexionsgrad versehen. Die Fläche erstreckt sich über fast den gesamten Umfang und ist lediglich durch eine Markierung 11 unterbrochen. In axialer Richtung kann sich die Fläche über den gesamten Abtastring 8 oder nur über einen Teil erstrecken. Die Markierung 11 ist als als Schlitz im Abtastring 8 ausgebildet, wobei unter diesem Schlitz ein Sackloch vorgesehen sein kann, das ähnlich einem « schwarzen Loch » wirkt.

Wenn, wie in Fig. 1 dargestellt ist, in die Ausnehmung 7 an der Rückseite der Magnetbandspule 4 der Schreibring 6 eingelegt ist, wird beim Einlegen der Magnetbandspule 4 der Abtastring 8 gegen die Kraft der Federn 9 in Richtung der Grundplatte 2 verschoben. Die Fläche mit dem hohen Reflexionsgrad liegt nun unterhalb des Abtastelements 10, so daß von diesem die Anwesenheit des Schreibrings 6 festgestellt werden kann. Wenn sich nun die Magnetbandspule 4 dreht, erkennt das Abtastelement 10 auch die Markierung 11 und erzeugt entsprechende Impulse, die für die dynamische Auswertung herangezogen werden. Das Beschreiben oder das Löschen des Magnetbands wird nur dann freigegeben, wenn diese Impulse erkannt werden. Es ist auch möglich, auf diese Weise die Funktionstüchtigkeit des Abtastelements 10 zu prüfen, da bei einem eingelegten Schreibring 6 und beim Drehen der Magnetbandspule 4 ständig diese Impulse auftreten müssen.

Bei der Darstellung in Fig. 2 wird angenommen, daß in der Ausnehmung 7 der Schreibring 6 nicht eingelegt ist. Beim Auflegen der Magnetbandspule 4 wird daher der Abtastring 8 infolge der Federkraft der Feder 9 teilweise in die Ausnehmung 7 hineingeschoben. Das Abtastelement 10 erhält nun kein reflektiertes Licht, so daß durch ein fehlendes Abtastsignal die Abwesenheit des Schreibrings 6 erkannt werden kann.

Bei dem in Fig. 3 dargestellten Blockbild ist eine Auswertestufe AS dargestellt, die die von dem Abtastelement 10 abgegebenen Abtastsignale AB auswertet. Die Auswertestufe AS enthält einen Verstärker V, dessen Ausgangssignal S1 unmittelbar für eine statische Überprüfung der An- oder Abwesenheit des Schreibrings 6 verwendet werden kann. Wenn sich der Abtastring 8 in der durchgezogen dargestellten Stellung befindet, wird ein Abtastsignal AB erzeugt, dem das Signal S1 zugeordnet ist. Der Verstärker V kann mit einem Integrierglied versehen sein, so daß die kurzzeitige Unterbrechung des Abtastsignals AB infolge der Markierung 11 im Signal S1 nicht auftritt. In einer Zeitstufe Z wird im Gegensatz hierzu das Auftreten der durch die Markierung 11 erzeugten Impulse bzw. Unterbrechungen der Abtastsignale AB überprüft, um ein Signal S2 für die dynamische Überprüfung zur Verfügung zu stellen. Die Zeitstufe Z kann beispielsweise als monostabile Kippstufe oder als Zähler ausgebildet sein, die wiedertriggerbar ausgebildet sind und immer in einen instabilen Zustand gesetzt werden, wenn die Markierung 11 erkannt wird.

## Patentansprüche

1. Abtastanordnung zum Abtasten eines in eine Magnetbandspule (4) eingelegten Schreibrings (6), bei der an dem die Magnetbandspule aufnehmendem Bandwickelträger (3) ein Abtastring (8) vorgesehen ist, der bei Aufsetzen einer Magnetbandspule mit eingelegtem Schreibring in axialer Richtung verschoben wird und der entlang seines Außenumfangs eine Fläche mit hohem Reflexionsgrad aufweist und bei der ein optoelektronisches Abtastelement (10) vorgesehen ist, das bei einem eingelegten Schreibring die Fläche abtastet und bei nicht eingelegtem Schreibring den Abtastring nicht abtastet, wobei somit kein reflektierter Lichtstrahl im Abtastelement empfangen wird und bei der die Abtastsignale einer Auswertestufe (AS) zugeführt werden, die bei eingelegtem Schreibring ein erstes Ausgabesignal (S1) unabhängig von einer Rotation des Abtastrings erzeugt, dadurch gekennzeichnet, daß innerhalb der Fläche mit hohem Reflexionsgrad eine als Schlitz in dem Abtastring ausgebildete Markierung (11) mit einem niedrigen Reflexionsgrad angeordnet ist, und daß die Auswertestufe bei eingelegtem Schreibring ein zusätzliches Ausgangssignal (S2) bei der Rotation des Abtastrings erzeugt.

2. Abtastanordnung nach Anspruch 1, dadurch gekennzeichnet, daß im Bereich des Schlitzes ein Sackloch in den Abtastring (8) eingelassen ist.

3. Abtastanordnung nach einem der Ansprüche 1 oder 2, dadurch gekennzeichnet, daß die Auswertestufe (AS) einen Verstärker (V) enthält, der das erste der Fläche mit dem hohen Reflexionsgrad zugeordnete Ansgangs-signal (S1) erzeugt und eine Zeitstufe (Z) enthält, die das Auftreten von der Markierung (11) zugeordneten Impulsen überprüft und das zweite Ausgangssignal (S2) abgibt.

4. Abtastanordnung nach Anspruch 3, dadurch gekennzeichnet, daß der Verstärker (V) ein Integrierglied enthält.

## Claims

1. A scanning arrangement for scanning a data protection ring (6) when inserted into a spool of magnetic tape (4), where the spool carrier (3) accommodating the spool of magnetic tape is provided with a scanning ring that is displaced in the axial direction when a spool of magnetic tape having an inserted data protection ring is placed in position, and is further provided along its outer periphery with a surface exhibiting a high degree of reflection, an opto-electronic scanning element (10) being provided which scans the surface when there is an inserted data protection ring, but does not scan the scanning ring if no data protection ring has been inserted, so that no reflected light beam is received in the scanning element, any scanning signals being fed to an analysis stage (AS) when there is an inserted data protection ring to generate a first output signal (S1) independently of rotation of the scanning ring, characterised in that the surface which exhibits the high degree of reflection contains a mark (11) which consists of a slot in the scanning ring exhibiting a low degree of reflection, and that when there is an inserted data protection ring the analysis stage generates an additional output signal (S2) when the scanning ring rotates.

2. A scanning arrangement as claimed in Claim 1, characterised in that in the region of the slot, a register hole is let into the scanning ring (8).

3. A scanning arrangement as claimed in one of Claims 1 or 2, characterised in that the analysis stage (AS) contains an amplifier (V) generating the first output signal (S1), assigned to the surface which exhibits the high degree of reflection, together with a timer stage (Z) which checks for the occurrence of pulses assigned to the mark (11) and emits the second output signal (S2).

4. A scanning arrangement as claimed in Claim 3, characterised in that the amplifier (V) contains an integrator.

## Revendications

1. Dispositif d'exploration pour détecter une bague d'écriture (6) insérée dans une bobine de bande magnétique (4), dans lequel une bague d'exploration (8) est prévue sur le support d'enroulement (3) recevant la bobine de bande magnétique, bague d'exploration qui, lors de la mise en place d'une bobine de bande magnétique avec une bague d'écriture insérée sur ce support, est déplacée axialement et qui présente une surface à haut cœfficient de réflexion le long de sa périphérie extérieure, dans lequel est prévu un élément d'exploration optoélectronique (10) qui, en cas d'insertion d'une bague d'écriture dans la bobine, explore cette surface, tandis qu'elle n'explore pas la bague d'exploration si la bague d'écriture n'a pas été insérée dans la bobine, de sorte que l'élément d'exploration ne reçoit pas de rayon lumineux réfléchi, et dans lequel les signaux d'exploration sont appliqués à un étage d'exploitation (AS) qui, en cas d'insertion de la bague d'écriture, génère un premier signal de sortie (S1), indépendamment d'une rotation de la bague d'exploration, caractérisé en ce que la surface à haut cœfficient de réflexion présente un marquage (11) avec un faible cœfficient de réflexion, réalisé sous forme d'une fente de la bague d'exploration, et que l'étage d'exploitation génère un signal de sortie supplémentaire (S2) pendant la rotation de la bague d'exploration au cas où une bague d'écriture a été insérée.

2. Dispositif selon la revendication 1, caractérisé en ce qu'un trou borgne est formé dans la bague d'exploration (8) dans la région de la fente.

3. Dispositif selon la revendication 1 ou 2, caractérisé en ce que l'étage d'exploitation (AS) contient un amplificateur (V) qui génère un premier signal de sortie (S1) coordonné à la surface à haut cœfficient de réflexion et qui contient un étage de temps (Z) contrôlant l'apparition d'impulsions coordonnées au marquage (11) et délivrant le deuxième signal de sortie (S2).

4. Dispositif selon la revendication 3, caractérisé en ce que l'amplificateur (V) contient un circuit d'intégration.

FIG 1

FIG 2

FIG 3